Europäisches Patentamt

European Patent Office

Office européen des brevets

(19)

(11) Veröffentlichungsnummer: **0 221 269 B1**

## (12) EUROPÄISCHE PATENTSCHRIFT

(45) Veröffentlichungstag der Patentschrift: **03.07.91**

(51) Int. Cl.⁵: **C09K 3/18**

(21) Anmeldenummer: **86111675.4**

(22) Anmeldetag: **22.08.86**

(54) **Gleitschutzmittel für vereiste und/oder verschneite Flächen.**

(30) Priorität: **10.09.85 AT 2647/85**

(43) Veröffentlichungstag der Anmeldung:
**13.05.87 Patentblatt 87/20**

(45) Bekanntmachung des Hinweises auf die
Patenterteilung:
**03.07.91 Patentblatt 91/27**

(84) Benannte Vertragsstaaten:
**BE CH DE FR GB IT LI LU NL SE**

(56) Entgegenhaltungen:
**EP-A- 0 077 767**
**DE-A- 3 142 059**
**DE-A- 3 315 159**
**US-A- 4 439 337**

(73) Patentinhaber: **Lang & Co., chemisch-
technische Produkte Kommanditgesellschaft
Herzog Friedrichplatz 1
A-3001 Mauerbach/Wien(AT)**

(72) Erfinder: **Kaes, Gertrude, Dipl.-Ing.
Kohlmarkt 1
A-1010 Wien(AT)**

(74) Vertreter: **Puchberger, Peter, Dipl.-Ing.
Patentanwälte Dipl.-Ing. Georg Puchberger
Dipl.-Ing. Rolf Puchberger Dipl.-Ing. Peter
Puchberger Singerstrasse 13
A-1010 Wien(AT)**

**Beschreibung**

Die Erfindung betrifft Gleitschutzmittel für vereiste und/oder verschneite Flächen, mit einem Gehalt an zumindest einem flüssigen Eislösemittel und wasserunlöslichen Gleitschutzmaterialien, wie Splitt aus Blähton, Bimsstein, Granit, Kalkgestein, Dolomit u.dgl.

Zur Vermeidung bzw. Verminderung der Rutschgefahr auf vereisten und/oder verschneiten Flächen werden üblicherweise zwei Methoden angewandt:

Die eine Methode besteht in der Erniedrigung des Gefrierpunktes wäßriger Lösungen, um gebildetes Eis und auch Schnee zur Auflösung zu bringen bzw. die Bildung solch vereister Flächen zu behindern. Als solche Mittel sind bisher anorganische Salze, wie Natriumchlorid, Magnesiumchlorid, Calziumchlorid, Alkali- und Ammoniumphosphate, -sulfate, -nitrate sowie organische Verbindungen wie Alkohole, Glykole, Glyzerin, Acetate, Lactate, Dicarbonate und Harnstoff bekannt und teilweise auch in praktischer Verwendung.

Neben der gefrierpunkterniedrigenden Wirkung auf Wasser ist beim Einsatz dieser Produkte die Frage der Umweltverträglichkeit und des Angriffes auf Metalle und Baustoffe von besonderer Bedeutung. Es ist bekannt, daß das bisher aus Kostengründen meistverwendete Eislösemittel Natriumchlorid ist, welches jedoch wegen seiner Wirkung auf die Umwelt immer mehr im Einsatz zurückgedrängt wird. Der Chlorgehalt verursacht in wäßriger Lösung sowohl starke Pflanzenschädigungen als auch starke Angriffe auf metallische Werkstoffe, Beton und Mauerwerk. Die Wasseraufnahme wird durch Chloride in den Wurzeln von Bäumen und niedrigen Pflanzen erschwert und auch der Natriumgehalt hat in höherer Konzentration negative Wachstumseinflüsse. Diese Chloride verseuchen nicht nur den Boden selbst sondern wandern auch in die Blätter der Pflanzen und verursachen dort Schädigungen. Die Blätter werden vom Rand her beginnend braun und fallen frühzeitig ab. Durch Regen und tauenden Schnee werden die Chloride aus diesen abgefallenen Blättern wieder ausgewaschen und der schädliche Chloridkreislauf beginnt von Neuem. Versuche zur Sanierung solch streusalzgeschädigter Alleebäume haben gezeigt, daß auch nach Beendigung der Streuung von Natriumchlorid Regenerierungszeiten bis zu 10 Jahren notwendig sind, bis der Chloridgehalt aus dem Boden ausgewaschen ist. Die U.S. Environmental Protection Agency hat in den letzten Jahren Untersuchungen über den Einfluß von Streusalzen durchgeführt und festgestellt, daß die volkswirtschaftlichen Schäden bei dieser Streuung etwa 14mal so hoch sind wie die Gesamtkosten der Gewinnung, Verteilung und Anwendung dieses Natriumchlorids selbst. Ähnliches gilt für die anderen chloridhaltigen Streumittel, wie Calzium- und Magnesiumchlorid.

Die übrigen genannten Eislösemittel können wesentlich unweltfreundlicher sein, abhängig von ihrer jeweiligen Zusammensetzung. Ihr Nachteil liegt in den höheren Kosten sowie etwaigen Eutrophobierungsgefahren von Gewässern, insbesondere bei höherem Phosphatgehalt. Nitrate können das Grundwasser negativ beeinflussen, wenn sie von den Pflanzenzonen nicht vorher aufgenommen werden und bedingen auch als starke Oxidationsmittel ein potentielles Manipulationsrisiko.

Die zweite Methode besteht in der Streuung von wasserunlöslichen Feststoffen bestimmter Teilchengröße, um auf Eis und auch festem Schnee die Rutschgefahr für Fußgeher und den rollenden Verkehr zu vermindern. Diese Methode wird von den Umweltschützern besonders propagiert, da keine wasserlöslichen Stoffe auftreten, welche das Abwasser oder die umgebenden Pflanzen beeinflussen können. Ihr Nachteil liegt in der wesentlich schlechteren Wirkung als Antigleitmittel im Vergleich zu den eislösenden Substanzen, sowie in der Gefahr, daß diese wasserunlöslichen Streumittel durch Wind, Verkehr und sonstige mechanische Einflüsse von der Eisoberfläche vertrieben werden.

Man hat daher versucht, die beiden zuvorgenannten Methoden zu kombinieren, indem z.B. wasserunlöslicher Gesteinssplitt mit granuliertem oder pulvrigem Harnstoff vermischt und als Eislöser/Antigleitmittel eingesetzt wird.

Auch diese Kombination hat sich jedoch nicht bewährt, da einerseits die Eislösewirkung von Harnstoff bei Temperaturen von ca. - 10° C und tiefer nicht mehr gegeben ist und andererseits vor allem die punktuelle Auftauwirkung solcher Gefrierpunkterniedriger nicht an den gleichen Stellen erfolgt, wo die wasserunlöslichen Gleitschutzpartikel liegen. Eine homogene und gleichmäßig abgestimmte Wirkung der beiden Komponenten würde hingegen so große Anwendungsmengen erfordern, daß dies weder praktisch durchführbar noch wirtschaftlich ist.

Eine andere bekannte Kombination hat darin bestanden, daß konzentrierte wäßrige Calziumchloridlösung auf wasserunlösliche Splitte aufgedüst wird. Neben der bereits vorgenannten Problematik des schädlichen Chloridgehaltes hat sich auch gezeigt, daß die Wirkung des Eislösers ungenügend ist. Dies ergibt sich dadurch, daß bei geschlossenen Oberflächen von wasserunlöslichem Gesteinssplitt nur geringe Mengen einer Flüssigkeit haften bleiben und der Rest wieder abrinnt, während bei saugfähigen Gesteinssplittoberflächen die gefrierpunkterniedrigende Flüssigkeit in das Innere der Splittpartikel eingesaugt wird und als Eislösemittel nicht oder nur mehr in ungenügendem Ausmaß zur Wirkung kommt. Diese beiden Beispiele seien stellvertretend für eine Reihe von Versuchen und Produkten genannt, bei denen durch Mischung von wasserunlöslichen Splitten und festen und/oder flüssigen Eislösemitteln aus den genannten Gründen eine unbefriedigende Gesamtwirkung erzielt wurde.

Es besteht daher nach wie vor ein echter Bedarf einer effizienten Lösung der Kombination wasserunlöslicher Streumittel mit Eislösern. Der vorliegenden Erfindung liegt somit die Aufgabe zugrunde, ein verbessertes Gleitschutzmittel vorzusehen, das die vorgenannten Nachteile nicht oder nur in verringertem Ausmaß aufweist. Insbesondere liegt die Aufgabe darin, Eislöser in einer solchen Form auf die einzelnen Partikel von wasserunlöslichen Antigleitschutzmitteln aufzubringen, daß deren volle Wirkung erhalten bleibt und eine Verankerung jedes wasserunlöslichen Teilchens in der Eis-/Schneeoberfläche durch Anlösung durch das gefrierpunkterniedrigende Mittel eintritt. Gemäß vorliegender Erfindung wird dies dadurch erreicht, daß ein Gleitschutzmittel für vereiste und/oder verschneite Flächen, mit einem Gehalt an zumindest einem flüssen Eislösemittel und wasserunlöslichen Gleitschutzmaterialien, wie Splitt aus Blähton, Bimsstein, Granit, Kalkgestein, Dolomit vorgesehen wird, wobei das Eislösemittel eine eislösende Flüssigkeit mit plastischen Fließeigenschaftenmit einem Brookfield Yield Value von wenigstens 10 Pa ist, daß das Eislösemittel eine Mischung einer eislösenden Flüssigkeit, ausgewählt aus der Gruppe ein- oder mehrwertige Alkohole, Glykole und wäßrige Lösungen von Salzen oder Salzgemischen von Mono- und Dicarbonsäuren, mit einem plastische Fließeigenschaften verleihenden Verdicker, wie Carboxyvinylpolymere oder deren Salze, Alginat, Bentonit oder Verdicker aus Johannisbrotsamen ist. Weitere erfindungswesentliche Merkmale sind den Patentansprüchen und der nachfolgenden Beschreibung zu entnehmen.

Der wasserlösliche Eislöser ist gemäß Erfindung eine viskose Lösung, die plastische Fließeigenschaften aufweist. Solche Lösungen mit plastischen Fließeigenschaften fließen solange nicht, bis die aufgewendeten Scherkräfte ein Minimum überschreiten. Die Viskosität dieser Lösungen ist demgegenüber nicht maßgebend. Bei einer Newtonschen Flüssigkeit ist der Fließwiderstand bei gegebener Temperatur eine Stoffkonstante und wird als dynamische Viskosität oder Zähigkeit bezeichnet. Flüssigkeiten (Lösungen) mit plastischen Fließeigenschaften hingegen fließen erst nach Überschreiten der Minimalbelastung für das jeweilige System und dies wird durch den Yield Value (auch Yield Index) bestimmt. Diese Fließgrenze verleiht z.B. auch Emulsionen und Dispersionen Stabilität, wenn sie genügend hoch ist.

Die Messung dieses plastischen Flusses kann mittels eines Brookfield RVT Viskosimeters erfolgen und wird dann durch den sogenannten Brookfield Yield Value repräsentiert:

$$\text{Brookfield Yield Value} = \frac{\text{Apparent Viscosity at 0,5-Apparent Viscosity at 1 rpm}}{100}$$

Erzeuger des Brookfield RVT Viskosimeters ist Brookfield Laboratories Inc., USA. Als Literaturstelle wird auf "A method for the Interpretation of Brookfield Viscosities" by R. Bowles, R. Davie, W. Todd, Modern Plasties, Nov. 1955, verwiesen.

Durch die plastischen Fließeigenschaften des Eislösers bei dem erfindungsgemäßen Gleitschutzmittel wird bewirkt, daß jedes wasserunlösliche Teilchen (Splitt) von dem Eislöser in entsprechender Schichtdicke umhüllt ist. Der Eislöser wird auch bei porösen Oberflächen nicht in das Innere der Teilchen eingesaugt und er rinnt von nichtsaugenden Oberflächen nicht ab. Dadurch ist verhindert, daß das Eislösemittel an der Splittoberfläche verarmt. Das Eislösemittel verbleibt nach dem Mischen mit Splitt als homogene Umhüllung um jedes Splitteilchen. Fällt dieses auf die eis- oder schneebedeckte Fläche, so tritt die eislösende Wirkung genau dort und mit genügender Eislösekraft auf, um das Splitteilchen fest zu verankern. Überraschenderweise hat sich weiters ergeben, daß diese hochviskosen und sogar gelartigen wasserlöslichen Substanzen praktisch gleiche Eislösewirkungen wie dünnere Flüssigkeiten haben, da die plastischen Fließeigenschaften das Spreiten an den Eisoberflächen und deren Lösung nicht beeinträchtigen. Weiters können Eislöseflüssigkeiten hergestellt werden, welche auch bei relativ niedriger Viskosität unterhalb eines angewandten Kräfteminimums (= Belastungsminimalwert) nicht fließende Gele darstellen. Erst nach Überschreitung dieser Minimalbelastung tritt ein Fließen ein. Beim Brookfield Yield Value hat sich für die vorliegende Erfindung ein vorteilhafter Bereich von etwa 10 bis etwa 51 Pa herausgestellt, wobei diese Grenzen nur beispielhaft sind.

Als wasserunlösliche Teilchen können auch alle herkömmlichen Gleitschutzmaterialien, wie Splitt aus Blähton, Bimsstein, Granit, Kalkgestein oder Dolomit u.dgl. verwendet werden. Die Teilchengröße des Splitts bewegt sich ebenfalls im üblichen Rahmen und Beispiele dafür sind in den nachfolgenden Ausführungsbeispielen angegeben. Üblicherweise bewegt sich die Teilchengröße zwischen 1 und 5 mm.

Das Eislösemittel kann praktisch jede eislösende Flüssigkeit sein, sofern sie plastische Fließeigenschaft annehmen kann. In bevorzugter Weise werden zur Vermeidung der eingangs genannten Nachteile ein- oder mehrwertige Alkohole oder eine wäßrige Lösung von Salzen oder Salzgemischen von Mono- und Dicarbonsäuren eingesetzt. In besonders bevorzugter Weise wird mehrwertiger Alkohol, wie Propylenglykol oder Glycerin verwendet. Die beiden zuletzt genannten Produkte sind äußerst umweltneutral. Es kann jedoch Monoäthylenglykol, Di- und Triäthylenglykol sowie Di- und Tripropylenglykol verwendet werden. Unter den Dicarbonsäuren seien besonders die industriell anfallenden Gemische aus Adipinsäure, Glutarsäure und Bernsteinsäure genannt.

Auch einwertige Alkohole, wie Methanol, Äthanol, Iso- und N-Propanol und Butanole können erfindungsgemäß eingesetzt werden. Wegen deren Brennbarkeit kann es dabei in der Praxis zu Schwierigkeiten kommen. Für besondere Anwendungsgebiete können sie aber ebenfalls vorteilhaft sein.

Um den genannten Eislösemitteln die notwendigen plastischen Fließeigenschaften zu verleihen, werden entsprechende Verdicker zugegeben. Als bevorzugte Beispiele für derartige Verdicker seien Carboxyvinylpolymere und deren Salze, Alginat, Bentonit und Verdicker aus Johannisbrotsamen genannt.

Die jeweils einzusetzenden Mengen der Bestandteile des erfindungsgemäßen Gleitschutzmittels können in breiten Grenzen variiert und den jeweiligen Erfordernissen angepaßt werden. In diesem Zusammenhang wird ebenfalls auf die nachfolgenden Beispiele verwiesen. Nur beispielsweise wird auf einen vorteilhaften Bereich von 5 Gew.-% bis 30 Gew.-% Eislösemittelanteil an der fertigen Gleitschutzmittelmischung hingewiesen.Es gilt dabei ein entsprechendes Kosten/Nutzenverhältnis einzuhalten. Ein Wert um 10 Gew.-% hat sich als vorteilhaft erwiesen.

Die nachfolgenden Beispiele sollen die vorliegende Erfindung beispielsweise näher erläutern.

Beispiel 1

Propylenglykol wird auf 60 - 70° C erwärmt und mit 1,2 Gew.-% eines hochmolekularen Carboxyvinylpolymers in dessen saurer Form verrührt und durch 0,15 Gew.-% Diisopropanolamin neutralisiert und verdickt. Es bildet sich ein Gel mit einer Brookfield Viskosität (20 UpM) von 140.000 cps bei 20° C.

Dieses Gel wird portionsweise in einen rotierenden Schaufelmischer gepumpt, in welchem sich gesplitterter Blähton mit folgenden Eigenschaften befindet:

| | |
|---|---|
| Schüttgewicht trocken: | $1.036 \ kg/m^3$ |
| Teilchengröße: | über 4 mm = 1,2 Vol.-% |
| | 3,15 - 4 mm = 36,3 Vol.-% |
| | 2 - 3,15 mm = 60,7 Vol.-% |
| | 1 - 2 mm = 1,8 Vol.-% |
| | unter 1 mm = 0 |

Es werden 7 Gew.-% des Propylenglykols auf 93 Gew.-% des vorgenannten Blähtons aufgebracht und im Mischer homogen verteilt und somit ein etwa gleichmäßiger Oberflächenfilm von Propylenglykol auf den festen, wasserunlöslichen Blähtonpartikeln gebildet. Der Yield Value (nach Brookfield) beträgt 51. Hiedurch wird voll gewährleistet, daß der mit Propylenglykol umhüllte Blähton auch bei längerer Lagerung bzw. Manipulation in der Zusammensetzung gleich bleibt und kein Abrinnen bzw. Diffusion der Flüssigphase von oder in die Festphase (Blähton) stattfindet. Dies trifft auch für alle praktisch vorkommenden Temperaturbereiche zu, da die Brookfield Viskosität von Minusgraden bis zu +60° C (und darüber) weitgehend unverändert bleibt. Das Fertigprodukt wirkt eislösend, indem das Propylenglykolgel Eis- und Schneeoberflächen bis zu tiefsten Temperaturen von z.B. -50° C und darunter anlöst und dadurch eine gute Verankerung der Feststoffteile im Eis eintritt. Durch Mechanische Belastung wie Reifendruck, Auftreten auf die Teilchen, wird diese Anlösung und Verankerung beschleunigt und verstärkt. Ein Wegnehmen oder Wegschleudern der Antirutschpartikel tritt praktisch nicht auf. Die genannte Kombination ist äußerst umweltfreundlich.

Die Blähtonpartikel sind wasserunlöslich und infolge ihrer Teilchengröße staubfrei. Das Eislösemittel Propylenglykol weist keine Wassergefährdung (Wassergefährdungsklasse = 0) auf und ist ungiftig für Mensch und Tier einschließlich Fische, LD 50 Ratte = 30.000 mg/kg, d.i. 10fache Verträglichkeit von Kochsalz. Durch den geringen Anteil an wasserlöslichem Eislöser ist das Fertigprodukt wirtschaftlich und verursacht auch praktisch keinen merkbaren Mehrbedarf an Luftsauerstoff bei biologischen Kläranlagen und bei der natürlichen Regenerierung des organische Bestandteile enthaltenden Wassers, da nur Minimalmengen von Kohlenstoff neben Sauerstoff und Wasserstoff aus dem Propylenglykol und Verdickungsmittel zusätzlich auftreten.

Beispiel 2

20 Gew.-% Propylenglykol, verdickt analog Beispiel 1, wird mit 80 Gew.-% Blähton homogen vermischt, wobei der Blähton folgende Spezifikationen aufweist:

Schüttgewicht trocken:     $307 \text{ kg/m}^3$

Teilchengröße:     über 4 mm    =   5,4 Vol.-%

      3,15 - 4 mm = 31,3 Vol.-%

      2 - 3,15 mm = 58,5 Vol.-%

      1 - 2 mm    =   4,8 Vol.-%

      unter 1 mm   =   0

Der Brookfield Yield Value beträgt ebenfalls 51. Das Schüttgewicht des Fertigproduktes liegt bei 0,45 kg/Liter. Dieses Produkt wird vorteilhafterweise dort eingesetzt, wo ein Wegkehren des Blähtons nach der Periode von Eisbildung nicht erfolgt, sondern derselbe mit dem abfließenden Schmelzwasser wegrinnt bzw. nach der Kälteperiode abgespült werden kann.

Beispiel 3

Eine konzentrierte Lösung von Kaliumazetat (250 g in 100 ccm Wasser) wird mit 2,5 % Alginat verdickt. 10 Gew.-% wäßriges Konzentrat wird auf 90 Gew.-% Kalkgesteinsplitt mit einer Teilchengröße 0,5 - 6 mm aufgebracht. Der Brookfield Yield Value beträgt 12. Es entsteht durch inniges Mischen ein haftender Überzug, welcher die Anlösung von Eis und Schnee sowie die Verankerung des Gesteinsplitts ermöglicht. Durch die Verdickung der Kaliumazetatlösung wird auch die Geruchsbildung aus dissoziierter Essigsäure vermindert.

Beispiel 4

Es wird eine konzentrierte wäßrige Lösung eines Kaliumsalzes von industriell anfallendem Gemisch von Dicarbonsäuren, bestehend aus 30 - 35 Gew.-% Adipinsäure, 40 - 50 Gew.-% Glutarsäure und 20 - 25 Gew.-% Bernsteinsäure, hergestellt. Diese Lösung wird mit Carboxyvinylpolymeren verrührt und durch Neutralisierung mit Kaliumhydroxid verdickt. Das so gebildete Gel wird mit
a) Granitsplitt
b) Kalksteinsplitt
c) schwerem Blähton lt. Beispiel 1
d) leichtem Blähton lt. Beispiel 2
in Mengen von 5 - 30 % der verdickten Kaliumdicarbonatlösung und 95 - 70 % der wasserunlöslichen Gleitschutzmittel innig vermischt und gelagert. Es tritt weder Entmischung der Kalisalze vom Gestein noch Konzentrationsverschiebung auf.
Der Brookfield Yield Value betrug 37, unabhängig von den verwendeten Mischungsverhältnissen.

Beispiel 5

20 Gew.-% eines Ammoniumsalzes des im Beispiel 4 genannten Dicarbonsäuregemisches werden auf 80 Gew.-% Bimsstein in Teilchengröße von 1 - 5 mm homogen aufgebracht. Der Brookfield Yield Value betrug 37.

Beispiel 6

EP 0 221 269 B1

7 Gew.-% synthetischen Glycerins werden mit einem Verdicker aus Johannisbrotsamen auf plastische Fließeigenschaften verdickt und 93 Gew.-% Blähton lt. Beispiel 1 homogen zugemischt. Der Brookfiled Yield Value betrug 19.

Beispiel 7

Propylenglykol wird mit Bentoniten auf eine plastische Fließfähigkeit verdickt (Brockfield Yield Value = 14). 10 % dieses Gels werden Blähton lt. Beispiel 1 zugemischt. Es tritt keine Veränderung der umhüllten Blähtonteilchen bei Lagerung auch über viele Monate hinweg ein. Die Eislösewirkung bleibt ebenfalls unverändert erhalten.

Beispiel 8

Die Fertigmischungen lt. Beispielen 1 bis 7 wurden auf Korrosion von metallischen Werkstoffen sowie Betonangriff untersucht. Es ergab sich keinerlei verstärkter Angriff im Vergleich zu normalem Schmelzwasser, und es ist daher eine volle Neutralität dieser Gemische gegenüber Bau- und Werkstoffen gegeben.

Die zuvor genannten Eislösemittel werden im Rahmen der vorliegenden Erfindung bevorzugt verwendet.

Selbstverständlich können auch beliebig andere Flüssigkeiten mit Eislösewirkung auf solche plastische Fließeigenschaften mit Brookfield Yield Value von bzw. über 10 Pa durch Zugabe geeigneter Mittel (meist wasserlösliche synthetische Harze bzw. deren Salze) zu bringen, z.B. wäßrige Calziumchlorid-, Calziumnitratlösungen, wäßrige Harnstoff-, Ammonsulfat-, Ammonnitrat-, Ammonchloridlösungen, niedrigere Alkohole wie Methanol, Äthanol, Propanol (enthaltend geringe Mengen an Wasser sowohl aus wirtschaftlichen Gründen - keine Absolutierung - als auch zur leichteren Lösung der Harze, welche diesen Flüssigkeiten die plastischen Fließeigenschaften verleihen).

Darüber hinaus können alle wäßrigen Lösungen von Salzen und organischen Stoffen, welche stockpunkterniedrigende Wirkungen auf Wasser aufweisen, mit geeigneten wasserlöslichen Harzen, wasserlöslichen Zellulosederivaten und Gummis auf die gewünschten plastischen Fließeigenschaften eingestellt werden, wenn diese Verdicker einen geeigneten Brookfield Yield Value erzielen lassen.

**Ansprüche**

1. Gleitschutzmittel für vereiste und/oder verschneite Flächen, mit einem Gehalt an zumindest einem flüssigen Eislösemittel und wasserunlöslichen Gleitschutzmaterialien, wie Splitt aus Blähton, Bimsstein, Granit, Kalkgestein, Dolomit u.dgl., dadurch gekennzeichnet, daß das Eislösemittel eine eislösende Flüssigkeit mit plastischen Fließeigenschaften mit einem Brookfield Yield Value von wenigstens 10 Pa ist, daß das Eislösemittel eine Mischung einer eislösenden Flüssigkeit, ausgewählt aus der Gruppe ein- oder mehrwertige Alkohole, Glykole und wäßrige Lösungen von Salzen oder Salzgemischen von Mono- und Dicarbonsäuren, mit einem plastische Fließeigenschaften verleihenden Verdicker, wie Carboxyvinylpolymere oder deren Salze, Alginat, Bentonit oder Verdicker aus Johannisbrotsamen ist.

2. Gleitschutzmittel nach Anspruch 1, dadurch gekennzeichnet, daß das Eislösemittel und die Gleitschutzmaterialien unter Bildung einer stabilen Mischung miteinander vermischt sind, wobei die Teilchen der Gleitschutzmaterialien von dem Eislösemittel homogen umhüllt sind.

3. Gleitschutzmittel nach Anspruch 1 oder 2, dadurch gekennzeichnet, daß die eislösende Flüssigkeit aus der Gruppe Monoäthylenglykol, Di- und Triäthylenglykol, Di- und Tripropylenglykol, Methanol, Äthanol, Iso- und n-Propanol und Butanol, jeweils allein oder als Mischung, gewählt ist.

4. Gleitschutzmittel nach einem der vorhergehenden Ansprüche 1 bis 3, dadurch gekennzeichnet , daß die eislösende Flüssigkeit ein mehrwertiger Alkohol, in bevorzugter Weise ein Propylenglykol oder Glycerin ist.

5. Gleitschutzmittel nach einem der vorhergehenden Ansprüche 1 bis 4, dadurch gekennzeichnet, daß die eislösende Flüssigkeit eine wäßrige Lösung von Salzen oder Salzgemischen von Mono- und Dicarbonsäuren ist.

6. Gleitschutzmittel nach einem der vorhergehenden Ansprüche 1 bis 5, dadurch gekennzeichnet, daß der Verdicker ein Carboxyvinylpolymer bzw.dessen Salz ist.

6

7. Gleitschutzmittel nach einem der vorhergehenden Ansprüche 1 bis 6, dadurch gekennzeichnet, daß das Eislösemittel in einer Menge von 5 bis 30 Gew.-%, bezogen auf das Gewicht des fertigen Gleitschutzmittels, vorliegt.

8. Gleitschutzmittel nach einem der vorhergehenden Ansprüche 1 bis 7, dadurch gekennzeichnet, daß der Brookfield Yield Value einen Wert zwischen 10 und 51 Pa aufweist.

9. Verfahren zur Streuung vereister und/oder verschneiter Flächen mit einem Gleitschutzmittel gemäß einem der Ansprüche 1 bis 8, dadurch gekennzeichnet, daß das flüssige Eislösemittel und die wasserunlöslichen Gleitschutzmaterialien miteinander vermischt und das Gemisch auf die vereiste und/oder verschneite Fläche aufgebracht wird.

## Claims

1. Anti-slip agent for icy and/or snow-covered surfaces, containing at least one liquid ice solvent and water-insoluble anti-slip materials, such as chips of light expanded clay aggregate, pumice stone, granite, limestone, dolomite and the like, characterized in that the ice solvent is an ice-dissolving liquid with plastic flow properties with a Brookfield Yield Value of at least 10 Pa and that the ice solvent is a mixture of an ice-dissolving liquid, selected from the group of monohydric or polyhydric alcohols, glycols and aqueous solutions of salts or mixtures of salts of mono- and dicarboxylic acids, with a thickener imparting plastic flow properties, such as carboxyvinyl polymers or their salts, alginate, bentonite, or thickener from carob seed.

2. Anti-slip agent according to claim 1, characterized in that the ice solvent and the anti-slip materials are mixed together with formation of a stable mixture, the particles of the anti-slip materials being homogeneously enveloped by the ice solvent.

3. Anti-slip agent according to claim 1 or 2, characterized in that the ice-dissolving liquid is selected from the group monoethylene glycol, di- and triethylene glycol, di- and tripropylene glycol, methanol, ethanol, iso- and n-propanol and butanol, in each case alone or as a mixture.

4. Anti-slip agent according to one of the preceding claims 1 to 3, characterized in that the ice-dissolving liquid is a polyhydric alcohol, preferably a propylene glycol or glycerol.

5. Anti-slip agent according to one of the preceding claims 1 to 4, characterized in that the ice-dissolving liquid is an aqueous solution of salts or salt mixtures of mono-and dicarboxylic acids.

6. Anti-slip agent according to one of the preceding claims 1 to 5, characterized in that the thickener is a carboxyvinyl polymer or its salt.

7. Anti-slip agent according to one of the preceding claims 1 to 6, characterized in that the ice solvent is present in an amount of 5 to 30 weight %, relative to the weight of the finished anti-slip agent.

8. Anti-slip agent according to one of the preceding claims 1 to 7, characterized in that the Brookfield Yield Value is between 10 and 51 Pa.

9. Process for strewing icy and/or snow-covered surfaces with an anti-slip agent according to one of claims 1 to 8, characterized in that the liquid ice solvent and the water-insoluble anti-slip materials are mixed together and the mixture is applied to the ice-covered and/or snow-covered surface.

## Revendications

1. Agent antidérapant pour des surfaces verglacées et/ou enneigées, contenant au moins un solvant liquide de la glace et des matériaux antidérapants insolubles dans l'eau, comme un gravillon d'argile expansée, de pierre ponce, de granit, de roche calcaire, de dolomite et similaires, **caractérisé** en ce que le solvant de la glace est un liquide dissolvant la glace et possédant des propriétés d'écoulement plastique avec un seuil d'écoulement Brookfield d'au moins 10 Pa, et en ce que le solvant de la glace est un mélange d'un liquide dissolvant la glace, choisi dans le groupe constitué par les monoalcools,

EP 0 221 269 B1

les polyalcools, les glycols et les solutions aqueuses de sels ou de mélanges de sels d'acides monocarboxyliques et dicarboxyliques, avec un épaississant conférant des propriétés d'écoulement plastique, comme les polymères carboxyvinyliques ou leurs sels, les alginates, la bentonite ou un épaississant tiré des graines de caroubier.

2. Agent antidérapant selon la revendication 1, **caractérisé** en ce que le solvant de la glace et les matériaux antidérapants sont mélangés l'un avec les autres, avec formation d'un mélange stable, les particules des matériaux antidérapants étant enrobées de façon homogène par le solvant de la glace.

3. Agent antidérapant selon la revendication 1 ou 2, **caractérisé** en ce que le liquide dissolvant la glace est choisi dans le groupe constitué par le monoéthylène-glycol, le diéthylène-glycol, le triéthylène-glycol, le dipropylène-glycol, le tripropylène-glycol, le méthanol, l'éthanol, l'isopropanol, le n-propanol et le butanol, utilisés soit seuls, soit sous forme d'un mélange.

4. Agent antidérapant selon l'une quelconque des revendications précédentes 1 à 3, **caractérisé** en ce que le liquide dissolvant la glace est un polyalcool, et de préférence un propylène-glycol ou la glycérine.

5. Agent antidérapant selon l'une quelconque des revendications précédentes 1 à 4, **caractérisé** en ce que le liquide dissolvant la glace est une solution aqueuse de sels ou de mélanges de sels d'acides monocarboxyliques et dicarboxyliques.

6. Agent antidérapant selon l'une quelconque des revendications précédentes 1 à 5, **caractérisé** en ce que l'épaississant est un polymère carboxyvinylique ou son sel.

7. Agent antidérapant selon l'une quelconque des revendications précédentes 1 à 6, **caractérisé** en ce que le solvant de la glace est présent en une quantité de 5 à 30 % en poids, par rapport au poids de l'agent antidérapant complet.

8. Agent antidérapant selon l'une quelconque des revendications précédentes 1 à 7, **caractérisé** en ce que le seuil d'écoulement Brookfield présente une valeur située entre 10 et 51 Pa.

9. Procédé pour répandre, sur des surfaces verglacées et/ou ennneigées, un agent antidérapant selon l'une quelconque des revendications 1 à 8, **caractérisé** en ce que le solvant liquide de la glace et les matériaux antidérapants insolubles dans l'eau sont mélangés l'un avec les autres et en ce que le mélange est répandu sur les surfaces verglacées et/ou enneigées.

8